# EUROPEAN PATENT APPLICATION

(11) **EP 1 950 555 A2**
(43) Date of publication of application: **30.07.2008**
(21) Application number: 08150345.0
(22) Date of filing: 17.01.2008
(51) Int. Cl.: G01N 21/64, B01L 3/00, B01L 7/00

(54) **Microchip inspection system, microchip inspection apparatus and a computer readable medium**

(30) Priority: 26.01.2007 JP 2007016153
(71) Applicant: Konica Minolta Medical & Graphic, Inc., Hino-shi, Tokyo 191-8511 (JP)
(72) Inventor: Sawazumi, Tsuneo, Hino-shi Tokyo 191-8511 (JP); Nakajima, Akihisa, Hino-shi, Tokyo 191-8511 (JP); Sando, Yasuhiro, Hino-shi Tokyo 191-8511 (JP)
(74) Representative: Henkel, Feiler & Hänzel

(57) **Abstract**

A microchip inspection system including: a microchip having at least a target substance and a reagent which is fluorescently labeled and is specifically combined with the target substance, wherein a reaction of the target substance and the reagent is performed and detecting a fluorescence intensity in a detected section of the microchip is performed; a microchip holder; a photo detection section; a reaction start device; and a control section for controlling a reaction start timing of the reaction start device and a detection timing of the fluorescence intensity before and after a reaction by the photo detection section, wherein the control section correlates a detection timing of the fluorescence intensity before the reaction by the photo detection section with the reaction start timing by the reaction start device.

## Description

### RELATED APPLICATION

This application is based on Japanese Patent Application No.2007-016153 filed on January 26, 2007 in Japan Patent Office, the entire content of which is hereby incorporated by reference

### FIELD OF THE INVENTION

The present invention relates to a microchip inspection system, a microchip inspection apparatus and a program.

### DESCRIPTION OF THE RELATED ART

In recent years, a micro total analysis system (µTAS), which mixes and reacts a plurality of solutions, detects and analyzes a state of a reaction on a microchip, into which a microfluidic pathways have been integrally formed, has attracted attention.

In the µTAS, there are merits, such as little amount of a specimen, a short reaction time and little waste. When it is used for a medical field, a burden to a patient can be eased by lessening amount of specimens (blood, urine, wiping liquid), and lessening amount of a reagent can lower the cost of an inspection. Moreover, since there is little amount of a specimen and a reagent, a reaction time is greatly shortened and the increase in efficiency of an inspection can be attained. Furthermore, since the apparatus is small, it can also be installed into a small medical institution, and it quickly can be inspected without selecting a place to be set.

In a microchip inspection system, a specimen and a reagent, which are stored in the microchip, are conveyed along a fluidic pathway by supplying a drive liquid to a microchip from a micropump. Thereby, the specimen and the reagent are mixed in the fluidic pathway and a reaction occurs. A reaction liquid is conveyed to a detected section in the microchip, and a detection of a concentration of a target substance in the reaction liquid is performed in a detection section.

For example, international publication No. WO/2005/108571 discloses an example of a detection of a target gene, which uses a microchip, onto which a microfluidic pathway has been integrally formed. First, a substance which traps the target gene, is fixed in the detection section of the microchip in advance. Next, a specimen and a reagent which is used for amplification of the target gene are reacted to generate an amplified product. By this, in case when the target gene is contained in the specimen, the target gene amplified in the amplified product will exist. Next, the amplified target gene is denatured to a single strand. The substance for trapping the target gene fixed in the detected section is allowed to trap the target gene by supplying the specimen to the detected section. Next, a target gene and a DNA probe are combined by a hybridization reaction by supplying the DNA probe to be hybridized to the target gene of a single strand to the detected section. The DNA probe is fluorescently labeled in advance. Next, a gold colloid liquid which is combined with the DNA probe combined with the trapped target gene, is supplied to the detected section, and the gold colloid is combined with the DNA probe. Next, in order to remove the gold colloid, which has not been combined, from the detected section, a cleaning fluid is supplied to the detected section. And the target gene is detected by optically detecting the concentration of the gold colloid in the detected section.

Moreover, Unexamined Japanese Patent Application Publication No. 2001-255328 discloses that in the detection of the target gene in a biochip, detecting a fluorescence intensity of a fluorescence emitted from a treatment liquid by irradiating an excitation light to the treatment liquid, in which the fluorescently labeled target gene and the DNA probe are hybridized.

Moreover, Unexamined Japanese Patent Application Publication No. 2003-517591 discloses a cycling probe method as a technology being capable of detecting the target gene in high sensitivity. It is a procedure of generating many fluorescent labeling to a small number of target gene by forming the target gene into a molding die and cyclically repeating the hybridization to the target gene of the DNA probe and isolation.

In the cycling probe method, a labeling of the DNA probe is made by a fluorochrome using fluorescence resonance energy transfer. The DNA probe, in a normal state, exists as a fluorescent substance, which is a donor, and a quencher, which is an acceptor, becoming a pair. Even though an excitation light is irradiated, the quencher absorbs the fluorescence emitted from the fluorescent substance and the donor's fluorescence is not generated. In a state where the DNA probe has caused the hybridization reaction with the target gene, binding between the fluorescent substance and the quencher is cut and the fluorescence of the fluorescent substance is emitted outside. In case when binding between the fluorescent substance and the quencher is cut, the DNA probe separates from the target gene. And the DNA probe in a normal state combines with the target gene, which became free, by the hybridization reaction again. Thus, by repeating the hybridization reaction, the DNA probe from which the quencher was cut is amplified and strong fluorescence intensity is obtained along with a progress of the reaction.

When conducting the detection by the fluorescence intensity as described in the Unexamined Japanese Patent Application Publication No. 2001 - 255328, in order to perform a precise detection, it will be necessary to correct the fluorescence intensity after the reaction by measuring the fluorescence intensity before the hybridization reaction.

Especially when using the cycling probe method, the fluorescence from the fluorescent substance should be absorbed by the quencher before the hybridization reaction. However, in fact, the fluorescence from the fluorescent substance, which was not absorbed by the quencher, appears as a weak fluorescence. For this reason, there is a large significance in measuring the fluorescence intensity before a reaction and correcting the fluorescence intensity after the reaction.

### SUMMARY OF THE INVENTION

The present invention is made based on such a requirement, and an object of the present invention is to provide a microchip inspection system, a microchip inspection apparatus and a computer readable memory storing program, which can execute a precise detection for a difference of the fluorescence intensity before and after the reaction.

One aspect of the invention is to provide, a microchip inspection system comprising: a microchip for detecting fluorescence intensity in a detected section, the microchip having at least a target substance and a reagent which is specifically combined with the target substance and is fluorescently labeled wherein a reaction of the target substance and the reagent is performed; a microchip holder which can store the microchip; a photo detection section including a light receiving section for receiving fluorescence from the detected section and a light emitting section for irradiating the detected section with excitation light, the photo detection section being provided corresponding to the detected section of the microchip stored in the microchip holder; a reaction start device, which starts the reaction; and a control section for controlling a reaction start timing of the reaction start device and a detection timing of the fluorescence intensity before and after reaction by the photo detection section, wherein the control section matches a detection timing of the fluorescence intensity before reaction by the photo detection section and reaction start timing by the reaction start device.

Another aspect of the invention is to provide, a microchip inspection apparatus comprising: a microchip holder which can store a microchip for detecting fluorescence intensity in a detected section, the microchip having at least a target substance and a reagent which is specifically combined with the target substance and is fluorescently labeled wherein a reaction of the target substance and the reagent is performed; a photo detection section including a light emitting section provided corresponding to a detected section of the microchip stored in a microchip holder and irradiating the detected section with excitation light and a light receiving section for receiving fluorescence from the detected section; a reaction start device, which starts the reaction; and a control section for controlling a reaction start timing of the reaction start device and a detection timing of the fluorescence intensity before and after reaction by the photo detection section, wherein the control section correlates a detection timing of the fluorescence intensity before reaction by the photo detection section with reaction start timing by the reaction start device.

Another aspect of the invention is to provide, a computer readable medium storing program wherein the program comprises, storing at least a target substance and a reagent which is specifically combined with the target substance and is fluorescently labeled, at a detection section of a microchip stored in a microchip holder; starting the reaction of the target substance and the reagent by a reaction start device, which starts the reaction; detecting a fluorescence intensity before reaction by the photo detection section; detecting a fluorescence intensity after reaction by the photo detection section; and correlating a detection timing of the fluorescence intensity before reaction by the photo detection section and reaction start timing by the reaction start device.

### BRIEF DESCRIPTION OF THE DRAWINGS

Fig. 1 illustrates an outline view of an inspection apparatus using a microchip related to an embodiment of the present invention.
Fig. 2 illustrates a block diagram of an inspection apparatus using a microchip related to an embodiment of the present invention.
Fig. 3 (a) illustrates an upper surface drawing of a microchip 1.
Fig. 3 (b) illustrates a side view of a microchip of a microchip 1.
Fig. 3 (c) is an illustration showing a situation where a covering board 109 in Fig. 3 (a) is removed.
Fig. 4 is an illustration showing a main portion of a control configuration of an inspection apparatus using a microchip related to an embodiment of the present invention.
Fig. 5 illustrates a flowchart of a detection control related to an embodiment of the present invention.

### DESCRIPTION OF THE PREFERRED EMBODIMENT

Hereafter, although an embodiment of the present invention is described based on drawings, it is an example and does not limit to an embodiment of the present invention.

Here, a "microchip" and an "inspection system" perform a chemical operation and a biochemical reaction, such as mixing, separation, synthesis, and extraction of bio molecules, such as protein and nucleic acid, such as DNA and RNA, within a small chip, and further denote a system configured by combining with an apparatus, which detects a reaction result.

### (Apparatus configuration)

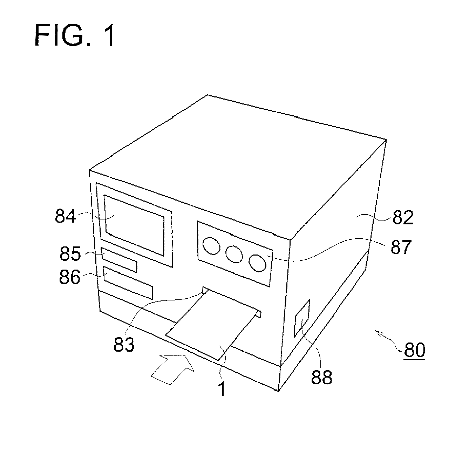

Fig. 1 illustrates an outline view of an inspection apparatus using a microchip related to an embodiment of the present invention. An inspection apparatus 80 is an apparatus which automatically reacts a specimen and a reagent, which were injected into a microchip 1 in advance, and automatically outputs a reaction result.

There are provided a loading slot 83 for inserting the microchip 1 into inside of the apparatus, a display section 84, a memory card slot 85, a print output slot 86, an operation panel 87, and an external I/O terminal 88 in a case 82 of an inspection apparatus 80.

An inspection person inserts the microchip 1 in a direction of an arrow in Fig. 1, and starts an inspection by operating the operation panel 87. When starting an operation, as will be explained later, a fluorescent reaction is started in the microchip 1 in the inspection apparatus 80, and an inspection result based on the detection result of the fluorescence is displayed on the display section 84. By operation of the operation panel 87, the inspection result can be outputted from the print output slot 86 as a print output, or can be stored into a memory card inserted into the memory card slot 85. Moreover, data can be saved in a personal computer, for example, by using a LAN cable from the external I/O terminal 88. The inspection person takes out the microchip 1 from the loading slot 83 after a completion of the inspection.

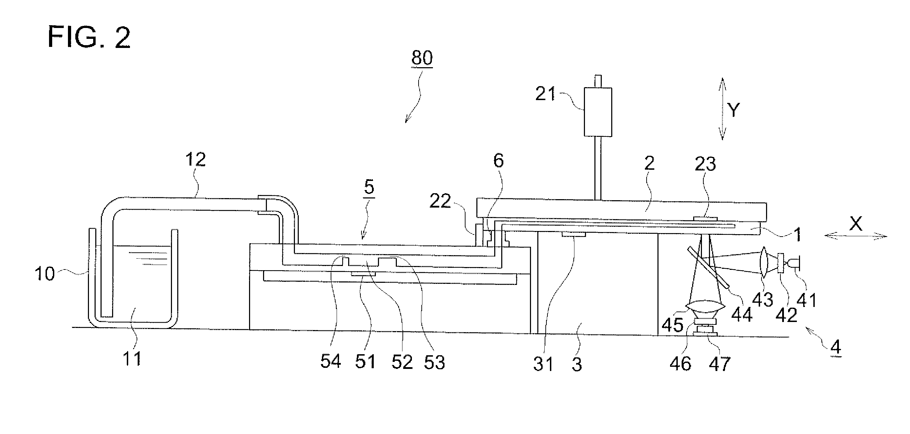

Fig. 2 is a block diagram of the inspection apparatus 80 using the microchip related to an embodiment of the present invention. A situation where the microchip is inserted from the loading slot 83 shown in Fig. 1, and the completion of a setting is illustrated in Fig. 2.

The inspection apparatus 80 includes a drive liquid tank 10 which stores a drive liquid 11 for sending the specimen and the reagent which were injected into the microchip 1 in advance, a micro pump 5 for supplying the drive liquid 11 to the microchip 1, a leak packing 6 to connect the micro pump 5 and the microchip 1 so that the drive liquid 11 may not leak, a thermoregulation unit 3, which adjust a temperature of a necessary portion of the microchip 1, a chip pressing plate 2 for making a close contact between the thermoregulation unit 3 and the leak packing 6 so that the microchip 1 may not be shifted, a pressure plate drive section 21 for raising and lowering the chip pressing plate 2, a regulation member 22 for precisely positioning the microchip 1 against the micro pump 5, and a photo detection section 4, which detects a reaction state of the specimen in the microchip 1 and the reagent.

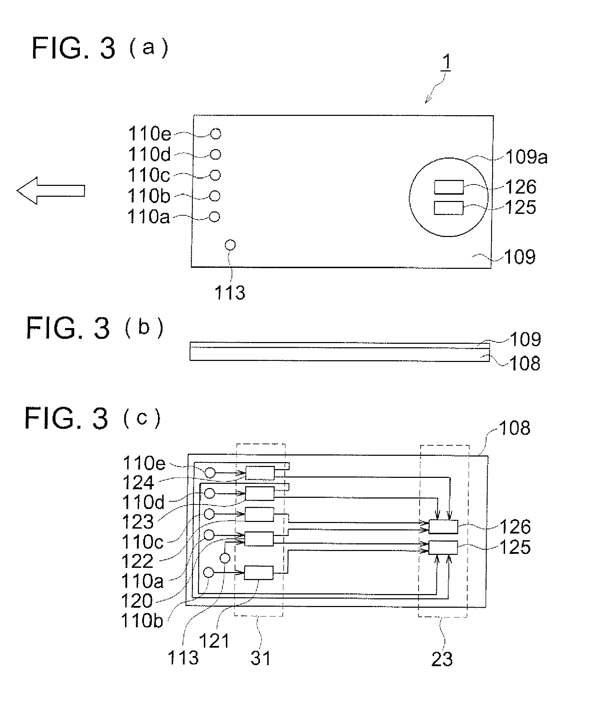

The chip pressure plate 2 has retracted upwards from the position shown in Fig. 2 in the initial state. Thereby, an insertion and an extraction of the microchip 1 is possible in the direction of an arrow X, and an inspection person inserts the microchip 1 from the loading slot 83 (refer to Fig. 1) until the microchip 1 contacts the regulation member 22. Then, the chip pressure plate 2 is lowered by the pressure plate actuator 21, and contacts the microchip 1. The lower surface of the microchip 1 closely contacts the thermoregulation unit 3 and the leak packing 6. Thereby, the setting of the microchip 1 is completed. The microchip holder of the present invention is configured by the regulation member 22, the chip pressure plate 2, the thermoregulation unit 3 and the leak packing 6. Moreover, a heater 23 for promoting an amplification reaction of the target gene and a hybridization reaction, which will be described later, by heating the detected sections 125 and 126 (refer to Fig. 3) of the set microchip 1, is provided inside of the chip pressure plate 2. The heater 23 is equivalent to the heating device of the present invention.

The thermoregulation unit 3 has a Peltier device 31 on a surface facing to the microchip 1. When the microchip 1 is set in the inspection apparatus 80, the Peltier device 31 is arranged to closely contact the microchip 1. The Peltier device 31 to keep the reagent from denaturing cools a portion in which the reagent is stored.

A photo detection section 4 is configured by an excitation light sources 41 as a light emitting section of the present invention, such as LED, an excitation light filter 42 for limiting a wavelength zone of the excitation light emitted from the excitation light source 41, a condenser lens 43 for forming the excitation light passed through the excitation light filter 42 into a beam spot, which matches the size, which covers the detection sections 125 and 126 (refer to Fig. 3) of the microchip 1, a dichroic mirror 44 for reflecting the excitation light passed through the condenser lens 43 to irradiate the excitation light to the detected sections 125 and 126 of the microchip 1, and for passing the fluorescence from the detected sections 125 and 126 of the microchip 1, which has been emitted by the excitation light, a light receiving lens 45 for guiding the fluorescence passed through the dichroic mirror 44 to a light receiving section 47, a detection light filter 46 for limiting the wavelength zone of the fluorescence passed through the receiving lens 45 and a light receiving section 47 configured by a photodiode for receiving the fluorescence passed through the detection light filter 46.

The micro pump 5 comprises a pump room 52, a piezo-electric element 51 for changing a capacity of the pump room 52, a first reduced fluidic pathway 53 located in the microchip 1 side of the pump room 52, and a second reduced fluidic pathway 54 located in the drive fluid tank 10 side of the pump room. The first reduced fluidic pathway 53 and the second reduced fluidic pathway 54 are the extorted narrow fluidic pathway, and the first reduced fluidic pathway 53 is a longer fluidic pathway than the second reduced fluidic pathway 54.

In case when conveying the drive liquid 11 to the forward direction (direction which goes to the microchip 1), it drives the piezo-electric element 51 first so that the volume of the pump room 52 may be rapidly decreased. Then, turbulence occurs in the second reduced fluidic pathway 54, which is a short, reduced fluidic pathway, and the flow path resistance in the second reduced fluidic pathway 54 becomes relatively large compared to the first reduced fluidic pathway 53, which is a long reduced fluidic pathway.
Thereby, the drive liquid 11 in the pump room 52 is dominantly pushed out in the direction of the first reduced fluidic pathway 53, and is conveyed. Next, the piezo-electric element 51 is driven so that the capacity of the pump room 52 is gradually increased. Then, drive liquid 11 will flow from the first diaphragm fluidic pathway 53 and the second reduced fluidic pathway 54 along with the increase in capacity in the pump room 52. Since a length of the second reduced fluidic pathway 54 is shorter compared to the first reduced fluidic pathway 53 at this time, a flow path resistance of the second reduced fluidic pathway 54 becomes smaller than that of the first reduced fluidic pathway 53, and the drive liquid 11 dominantly flows into the pump room 52 from the direction of the second reduced fluidic pathway 54. When the piezo-electric element 51 repeats the above operation, the drive liquid 11 will be conveyed in a forward direction.

On the other hand, first, in case when conveying the drive liquid 11 to an opposite direction (direction which heads to the drive fluid tank 10), the piezo-electric element 51 is driven so that the capacity of the pump room 52 is gradually decreased. Since the length of the second reduced fluidic pathway 54 is shorter compared to the first reduced fluidic pathway 53, the flow path resistance of the second reduced fluidic pathway 54 becomes smaller compared to that of the first reduced fluidic pathway 53. Thereby, the drive liquid 11 in the pump room 52 is dominantly pushed out in the direction of the second reduced fluidic pathway 54, and is conveyed. Next, the piezo-electric element 51 is driven so that the capacity of the pump room 52 is rapidly increased. Then, the drive liquid 11 will flow in from the first reduced fluidic pathway 53 and the second reduced fluidic pathway 54 along with the increase in the capacity in the pump room 52. At this time, turbulence occurs in the second reduced fluidic pathway 54, which is a short reduced fluidic pathway, and the flow path resistance in the second reduced fluidic pathway 54 becomes relatively large compared to the first reduced fluidic pathway 53, which is a long reduced fluidic pathway. Thereby, the drive liquid 11 dominantly flows into the pump room 52 from the direction of the first reduced fluidic pathway 53. When the piezo-electric element 51 repeats the above operation, the drive liquid 11 will be liquid conveyed in the opposite direction.

### (CONFIGURATION OF MICROCHIP)

Fig. 3 illustrates a configuration of the microchip 1 of an embodiment of the present invention. Fig. 3 (a) illustrates an upper surface view of the microchip 1. Fig. 3 (b) illustrates a side view of the microchip 1. Fig. 3 (c) is an illustration showing a situation where a covering board 109 in Fig. 3 (a) is removed. An example of the configuration is shown and it is not limited to this.

In Fig. 3 (a), an arrow shows the insertion direction, into which the microchip 1 is inserted in the inspection apparatus 80, and Fig. 3 (a) illustrates the surface, which becomes the lower surface of the microchip 1 at the time of insertion. Fig. 3 (b) illustrates a side view of the microchip 1.

As shown in Fig. 3 (b), the microchip 1 comprises a groove formed board 108 and the covering board 109, which covers groove formed board 108.

As shown in Fig. 3 (c), the microfluidic pathway and the fluidic pathway element for mixing and reacting the specimen and the reagent on the microchip 1 are provided in the groove formed board 108. In Fig. 3 (c), an arrow schematically shows the microfluidic pathway and the quadrangle schematically shows the fluidic pathway element.

The following fluidic pathway elements are provided on the microchip 1.

Drive liquid injection sections 110a-110e are injection sections for injecting the drive liquid 11 from the micropump.

A specimen injection section 113 is an injection section for injecting the specimen into the microchip 1.

Downstream of the drive liquid injection sections 110a-110e, there are provided respectively a specimen storage section 120 for storing the specimen, a positive control storage section 121 for storing the positive control reagent of the target gene, a negative control storage section 122 for storing the negative control reagent, an enzyme and a substrate storage section 123 for amplifying a target gene, and a primer and a fluorescently labeled DNA probe storage section 124. Each reagent is stored in each storage section in advance.

The positive control reagent and the negative control reagent are reagents for monitoring whether the inspection was conducted in a normal manner.

The fluorescently labeled DNA probe, which is used by the cycling probe method, is modified with chimera oligonucleotide composed of RNA and DNA. One end is modified with the fluorescent substance and another end is modified with the quencher. In an intact state, although the fluorescent is not emitted with a fluorescence resonance energy transition phenomenon, in case when the fluorescently labeled DNA probe and the target gene cause a hybridization reaction, an RNA part will be cut and the fluorescent will be emitted.

Each of above-mentioned storage sections oppose to the Peltier device 31, when the microchip 1 is set in the inspection apparatus 80, and cooled down so that the specimen or the reagent stored in each storage section is not denatured.

In the downstream of the specimen storage section 120, the positive control storage section 121, the enzyme and the substrate storage section 123 and the primer and the fluorescently labeled DNA probe storage section 124, there is provided a detected section 125 for performing the amplification reaction and the detection to the mixed-solution of the specimen and the positive control reagent.

In the downstream of the specimen storage section 120, the negative control storage section 122, the enzyme and the substrate storage section 123, the primer and the fluorescently labeled DNA probe storage section 124, there is provided a detected section 126 for performing the amplification reaction and the detection to the mixed-solution of the specimen and the negative control reagent.

When setting the microchip 1 in the inspection apparatus 80, the detected sections 125 and 126 oppose to the heater 23 and heated for a promotion of the amplification.

The detected sections 125 and 126, and the window section 109a of the covering board 109 corresponding to the detected sections 125 and 126 comprise materials, such as transparent glass and resin, so that optical detection can be performed.

The specimen and the flow of each reagent are explained. First, prior to conducting the inspection by the microchip 1, the inspection person injects the specimen from the specimen injection section 113 using a syringe. The specimen injected from the specimen injection section 113 is stored in the specimen storage section 120 through the microfluidic pathway, which communicates with the specimen storage section 120.

Next, the microchip 1 into which the specimen was injected is inserted in the loading slot 83 of the inspection apparatus 80 shown in Fig. 1 by the inspection person, and it is set as shown in Fig. 2. Based on this operation, it becomes possible to drive the micro pump 5 and to inject the drive liquid 11 from the drive liquid injection sections 110a-110e.

First, when the drive liquid 11 is injected from the drive liquid injection section 110a, the specimen stored in the specimen storage section 120 will be pushed out through the microfluidic pathway which communicates therewith and the specimen will be sent into the detected sections 125 and 126.

Next, when the drive liquid 11 is injected from the drive liquid injection section 110b, the positive control reagent (reagent with the same DNA arrangement portion as the target gene) stored in the positive control storage section 121 will be pushed out through the microfluidic pathway which communicates therewith. The positive control reagent is sent into the detected section 125, and mixed with the previously liquid conveyed specimen.

Next, when the drive liquid 11 is injected from the drive liquid injection section 110c, the negative control reagent (for example, purified water) stored in the negative control storage section 122 will be pushed out through the microfluidic pathway which communicates therewith. The negative control reagent is sent into the detected section 126, and mixed with the previously liquid conveyed specimen.

Next, when the drive liquid 11 is injected from the drive liquid injection sections 110d and 110e, the enzyme and the substrate, and the primer and the fluorescently labeled DNA probe are respectively sent into the detected sections 125 and 126 from each storage section of 123 and 124 along the microfluidic pathway, which is communicated therewith, and mixed with the mixed-solution of the previously liquid conveyed specimen and control liquid.

Next, when the detected sections 125 and 126 are heated by the heater 23, in each detected section, the amplification reaction of the target gene (and the positive control DNA), the hybridization reaction of an amplified product and a fluorescent probe, and the isolation reaction of a fluorescent substance and the quencher concurrently progress, and the reaction from amplification to the fluorescent substance generation is collectively performed at once.

And it becomes possible to perform the photo detection by irradiating the excitation light from the excitation light source 41 of the photo detection section 4 at the detected sections 125 and 126, and by receiving the fluorescent emitted from the detected sections 125 and 126 on the light receiving section 47.

In addition, it may be possible to perform the amplification reaction, the hybridization reaction, and the detection with a separate fluidic pathway element as a modification. Moreover, on the apparatus configuration, the position of the heater 23 or the Peltier device 31 may be somewhat changed, as long as those mechanisms are satisfied.

Table 1 shows an example of a rule for conducting a comprehensive determination of the inspection based on the detection result of the detected sections 125 and 126 is conducted.

**Table 1**

| Existence of fluorescence luminescence | | Judgment |
|---|---|---|
| Specimen and positive control reagent (Detected section 125) | Specimen and negative control reagent (Detected section 126) | |
| Exist | Exist | Positive (with a target gene) |
| Exist | Non-exist | Negative (without a target gene) |
| Non-exist | Exist | Re-examination (Occurrence of mixing abnormality in a reagent or reaction inhibition) |
| Non-exist | Non-exist | |

The positive control causes the amplification reaction, which is equivalent to the target gene even only with the reagent alone, the hybridization reaction with the DNA probe, and the generation reaction of the fluorescent substance. The negative control does not cause the generation reaction of the fluorescent substance in the reagent alone.

By performing the reaction and the detection to the mixed-solution, which is a mixture of those reagents and the specimen, the good-or-bad determination of the inspection result shown in Table 1 is attained.

In case of a positive result, namely, when the target gene is contained in the specimen, the mixed-solution of the specimen and the positive control reagent, and the mixed-solution of the specimen and the negative control reagent generate the fluorescence luminescence. In case of a negative result, namely, when the target gene is not contained in the specimen, the mixed-solution of the specimen and the positive control reagent generates the fluorescence luminescence by the reaction of positive control, but the mixed-solution of the specimen and the negative control reagent does not generate the reaction, therefore, the fluorescence luminescence is not generated. These two cases can be treated as the inspection results to which the normal reactions have been performed.

On the other hand, for example, in case when an inhibitory substance of the reaction has been mixed into the specimen, neither of the mixed-solution of the specimen and the positive control reagent nor of the mixed-solution of the specimen and the negative control reagent, generate the fluorescence luminescence. In case when there is the fluorescence luminescence in the mixed-solution of the specimen and the negative control reagent, and no fluorescence luminescence in mixed-solution of the specimen and the positive control reagent, abnormalities, such as inactivation of the reagent stored in the microchip 1, can be taken for a consideration. It is possible to prompt re-examination as these two cases have the inspection results, which performed the unusual reaction

### (Control configuration)

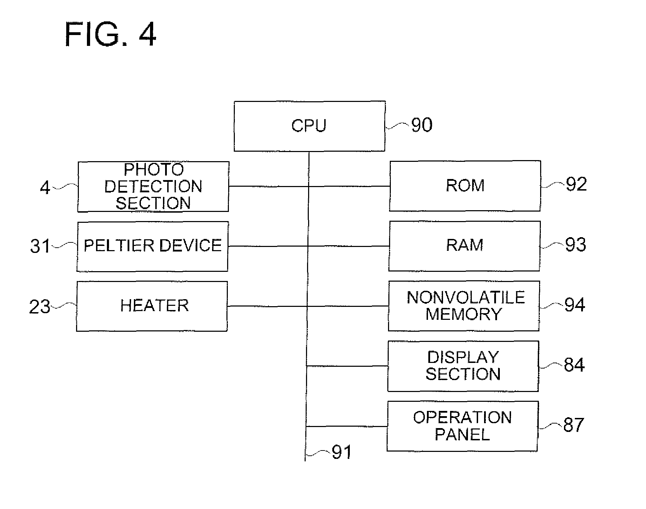

Fig. 4 is an illustration showing the main portion of the control configuration of the inspection apparatus using the microchip related to an embodiment of the invention. The main configuration factors related to control of the present invention are shown.

Centering on a CPU 90, which executes a control of the inspection apparatus 80 corresponding to a program, a ROM 92, a RAM 93, a nonvolatile memory 94, the photo detection section 4, the Peltier device 31, the heater 23, the display section 84 and the operation panel 87, are reciprocally connected by a bus 91.

The ROM 92 stores various control programs and data, which are executed by the CPU 90.

The RAM 93 is utilized as a work area by the CPU 90, and in case when the CPU 90 executes control, the RAM 93 temporarily stores necessary programs and data.

The nonvolatile memory 94 stores the detection result from the photo detection section 4.

The CPU 90 executes control based on the program stored in ROM 92. It functions as a control section of the present invention.

Since the explanations about the photo detection section 4, the Peltier device 31, the heater 23, the display section 84, and the operation panel 87 are mentioned above, the explanations are omitted.

### (Flow of Detection control)

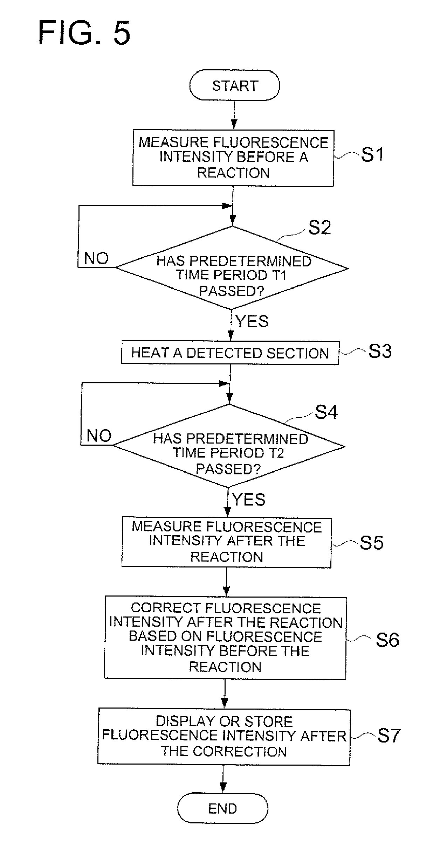

Fig. 5 illustrates a flowchart of the detection control related to an embodiment of the present invention. An example of a case when the amplification reaction of the target gene by the cycling probe method, and the hybridization reaction of the target gene and the DNA probe are started by the heater 23 executing heating is explained. The heater 23 is equivalent to a reaction start device of the present invention.

The CPU 90, which executes a processing based on the detection control program stored in the ROM 92, performs the detection control. Further, under an assumption that an inspection is started by the input of an inspection start from the operation panel 87 of the inspection apparatus 80, and that each reagent with which chemical operation of the mixing has been conducted in the fluidic pathway of the microchip 1 has already been sent into detected sections 125 and 126.

First, the CPU 90 measures the fluorescence intensity before the reaction by the photo detection section 4 (STEP S1). Therefore, it becomes possible to detect a weak fluorescence from the fluorescent substance, which was not absorbed by the quencher.

Next, the CPU 90 determines whether a predetermined time T1 (for example, several seconds) has passed (STEP S2).

When it is determined that the predetermined time T1 has passed (STEP S2; Yes), the CPU 90 heats the detected sections 125 and 126 with the heater 23 (STEP S3). A temperature control is executed to control a temperature suitable for the amplification reaction of the target gene, and the hybridization reaction.

When it is determined that the predetermined time T1 has not passed (STEP S2; No), the CPU 90 will stand by until the predetermined time T1 passes.

Next, the CPU 90 determines whether a predetermined time T2 (for example, several minutes) has passed (STEP S4). Accordingly, it is determined whether the hybridization reaction fully progressed by passage of the predetermined time T2.

When it is determined that the predetermined time T2 has passed (STEP S4; Yes), the CPU 90 will measure the fluorescence intensity after the reaction by the photo detection section 4 (STEP S5).

When it is determined that the predetermined time T2 has not passed (STEP S4; No), the CPU 90 will stand by until the predetermined time T2 passes. In the meantime, the heating is continued.

Next, the CPU 90 corrects the fluorescence intensity after the reaction based on the fluorescence intensity before the reaction (STEP S6). For example, the CPU 90 corrects by deducting the fluorescence intensity before the reaction from the fluorescence intensity after the reaction. The difference of the fluorescence intensity before and after the reaction can be measured accurately and efficiently for every microchip by the correction.

Next, the CPU 90 displays the fluorescence intensity after the correction on the display section 84, or saves the fluorescence intensity after the correction at the nonvolatile memory 94 (STEP S7). Then, the flow ends.

As mentioned above, according to this embodiment of the present invention, since the control is conducted by managing the time (the predetermined time Tl) from the detection timing before the reaction to the heating start, which is the reaction start timing, for example, the difference of the fluorescence intensity by the reaction can be measured accurately in case when the predetermined time T1 is set up so that a timing of the detection before the reaction is conducted just before the reaction start.

In this embodiment of the present invention, as for a measurement before the reaction, the fluorescence intensity is measured before heating by the heater 23. However, depending on the reagent, the reaction may not progress for a while even when the heating has started. In such a case, the fluorescence intensity may be measured concurrent with heating, or before the reaction progresses after heating. Having the fluorescence intensity measured before the reaction progresses after heating, for example, an influence on the fluorescence intensity or the detection by the convection of the liquid by heating of the detected sections 125 and 126 can be removed. In this case, STEP S1 and STEP S3 can be interchanged, in Fig. 5.

After the predetermined time T1 passes from a start of a heating, it is necessary to control an execution of the detection before the reaction, in case when the fluorescence intensity greatly changes by temperature. In this case, in Fig. 5, what is necessary is to drive the micropump 5 mentioned above at STEP S1, and to measure the fluorescence intensity before the reaction (STEP S3) after the predetermined time T1, when the liquid conveyance is completed, has passed (STEP S2).

In this embodiment of the present invention, a case where the reaction was started by heating was explained. However, the control of this invention can also be applied to a case where the reaction progresses only by mixing. In this case, the liquid conveyance of the target substance and/or the reagent starts the reaction. And, the mixed completion timing when a mixture of the target substance and the reagent by the liquid conveyance completes, and the detection timing of the fluorescence intensity before the reaction are correlated. Therefore, even if it is the reaction without temperature dependence, the difference of the fluorescence intensity before and after the reaction can be measured accurately and efficiently for every microchip. In this case, after the liquid conveyance of the DNA probe from the detection reagent storage section 124 to the detected sections 125 and 126 has completed, it is preferred to measure the fluorescence intensity before the reaction. Since the liquid amount becomes equivalent before and after the reaction when stored in the detected sections 125 and 126, the fluorescence intensity can be measured more accurately. A determination of the completion of the liquid conveyance may be conducted by a prediction from the amount of liquid conveyance of the micropump 5. A sensor, such as a liquid level sensor for detecting the liquid amount of the detected sections 125 and 126, may be provided separately. In this case, the micropump 5 is equivalent to the reaction start device and the liquid conveyance device of the present invention.

Like this embodiment of the present invention, applying control of the present invention to the system, in which the DNA arrangement detection reaction of the target gene by the cycling probe method having a tendency to generate the weak fluorescence is conducted, has a large significant on accurately conducting measurement of the difference of the fluorescence intensity before and after the reaction. The reaction by the cycling probe method progresses quickly. Therefore, it is important to determine the measurement timing in a consideration of the reaction, when accurately measuring the difference of the fluorescence intensity before and after the reaction.

As mentioned above, according to the present invention, since the detection timing before the reaction is set to match with the reaction start timing, the difference of the fluorescence intensity before and after the reaction can be measured accurately, and a precise detection can be performed.

## Claims

1. A microchip inspection system comprising:
a microchip having at least a target substance and a reagent which is fluorescently labeled and is specifically combined with the target substance, wherein a reaction of the target substance and the reagent is performed and detecting a fluorescence intensity in a detected section of the microchip is performed;
a microchip holder which can store the microchip;
a photo detection section being provided corresponding to the detected section of the microchip stored in the microchip holder, and including a light receiving section for receiving fluorescence from the detected section and a light emitting section for irradiating the detected section with an excitation light;
a reaction start device, which starts the reaction; and
a control section for controlling a reaction start timing of the reaction start device and a detection timing of the fluorescence intensity before and after a reaction by the photo detection section,
wherein the control section correlates a detection timing of the fluorescence intensity before the reaction by the photo detection section with the reaction start timing by the reaction start device.

2. The microchip inspection system according to claim 1,
wherein the reaction start device is a heating device for heating the microchip stored in the microchip holder and the control section correlates the detection timing of the fluorescence intensity before the reaction by the photo detection section with a heating start timing by the heating device.

3. The microchip inspection system according to claim 2,
wherein the control section starts a heating by the heating device at a predetermined time after the detection timing of the fluorescence intensity before the reaction by the photo detection section.

4. The microchip inspection system according to claim 2,
wherein the control section executes the detection of the fluorescence intensity before the reaction, at the same time as the heating start timing by the heating device or at a predetermined time after the heating start timing.

5. The microchip inspection system according to claim 1, wherein the reaction start device is a liquid conveyance device and the control section correlates the detection timing of the fluorescence intensity before the reaction by the photo detection section with a mixed completion timing when a mixture of the target substance and the reagent by the liquid conveyance completes.

6. The microchip inspection system according to claim 5, wherein the control section executes the detection of the fluorescence intensity before reaction by the photo detection section, at the same time as the mixed completion timing when the mixture of the target substance and the reagent completes or a predetermined time after the mixed completion timing.

7. The microchip inspection system according to claim 5 or claim 6, wherein the mixed completion timing is a timing when a liquid conveyance of the target substance or the reagent to the photo detection section by the liquid conveyance device is completed.

8. The microchip inspection system according to any one of claims 1 - 7, wherein the control section corrects the fluorescence intensity detected by the photo detection section after the reaction, based on the fluorescence intensity detected by the photo detection section before the reaction.

9. The microchip inspection system according to any one of claims 1 - 8, wherein the target substance is a target gene and the reagent which is specifically combined with the target substance is a fluorescently labeled DNA probe and the reaction is a reaction causing a change in a fluorescence resonance energy transition phenomenon by a hybridization reaction of the target gene and the DNA probe.

10. A microchip inspection apparatus comprising:
a microchip holder which can store a microchip wherein the microchip has at least a target substance and a reagent which is fluorescently labeled and specifically combined with the target substance, a reaction of the target substance is performed, and a detecting fluorescence intensity is performed in a detected section of the microchip;
a photo detection section including a light emitting section provided corresponding to the detected section of the microchip stored in the microchip holder and irradiating the detected section with an excitation light and a light receiving section for receiving fluorescence from the detected section;
a reaction start device which starts the reaction; and
a control section for controlling a reaction start timing of the reaction start device and a detection timing of the fluorescence intensity before and after the reaction by the photo detection section,
wherein the control section correlates the detection timing of the fluorescence intensity before the reaction by the photo detection section with the reaction start timing by the reaction start device.

11. A computer readable medium storing program wherein the program comprises,
storing at least a target substance and a reagent which is fluorescently labeled and is specifically combined with the target substance, at a detection section of a microchip stored in a microchip holder;
starting a reaction of the target substance and the reagent by a reaction start device which starts the reaction;
detecting a fluorescence intensity before the reaction by the photo detection section;
detecting a fluorescence intensity after the reaction by the photo detection section; and
correlating a detection timing of the fluorescence intensity before reaction by the photo detection section and reaction start timing by the reaction start device.
